# EUROPEAN PATENT SPECIFICATION

(11) **EP 0 523 665 B1**
(45) Date of publication and mention of the grant of the patent: **28.12.1994**
(21) Application number: 92112092.9
(22) Date of filing: 15.07.1992
(51) Int. Cl.: F04B 27/08, F16J 15/02

(54) **Sealing mechanism employed in compressor housing**
Dichtungseinrichtung für ein Kompressorgehäuse
Dispositif d'étanchéité pour un carter de compresseur

(30) Priority: 19.07.1991 JP 203775/91
(43) Date of publication of application: 20.01.1993
(73) Proprietor: SANDEN CORPORATION, Isesaki-shi Gunma, 372 (JP)
(72) Inventor: Kobayashi, Hideto, c/o SANDEN CORPORATION, Isesaki-shi, Gunma 372 (JP)
(74) Representative: Prüfer, Lutz H., Dipl.-Phys.

(56) References cited:
- US-A- 2 835 436
- US-A- 3 278 110
- US-A- 3 761 202

## Description

The present invention relates to a compressor casing as defined in the preamble of claim 1, and in particular to a sealing mechanism employed in the compressor casing or housing. A compressor casing of this kind is for example disclosed in document US-A-3 761 202.

Further, slant plate type refrigerant compressors, such as wobble plate type refrigerant compressors, are well-known in the art, as disclosed in US-A-4 872 815.

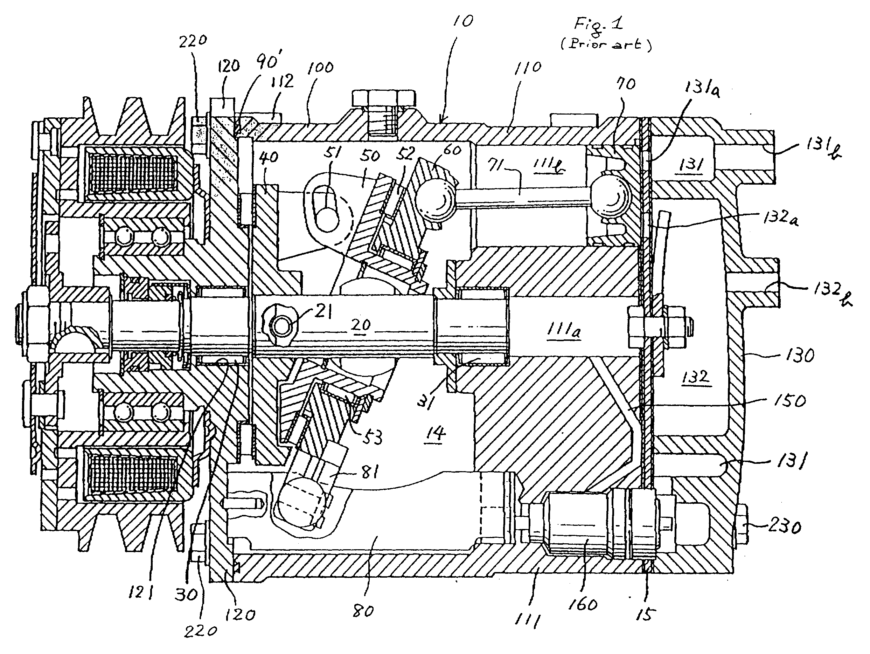

Referring to Figure 1, the construction of a wobble plate type refrigerant compressor with a variable displacement mechanism in accordance with one embodiment of US-A-4 872 815 patent is shown. For purposes of explanation only, the left side of the Figure will be referenced as the forward end or front and the right side of the Figure will be referenced as the rearward end. Furthermore, operation of the wobble plate type refrigerant compressor with the variable displacement mechanism is described in detail in above US-A-4 872 815 patent so that an explanation thereof omitted.

A wobble plate type refrigerant compressor 10 includes compressor housing 100 having cylindrical portion 110, front end plate portion 120 and a rear end plate portion 130 these which are separately formed. Cylinder block 111 and crank chamber 14 are located in cylindrical portion 110. Front end plate portion 120 is fixedly attached to a front end surface of cylindrical portion 110 by a plurality of securing bolts 220, and rear end plate portion 130 is fixedly attached to a rear end surface of cylinder block 111 by a plurality of securing bolts 230 through a valve plate assembly 15. Opening 121 is formed in the central region of front end plate portion 120 to receive drive shaft 20.

Drive shaft 20 is rotatably supported in front end plate portion 120 through bearing 30 disposed within opening 121. An inner rear end portion of drive shaft 20 extends into central bore 111a formed in the central region of cylinder block 111, and is rotatably supported therein by bearing 31. Rotor 40, disposed in the interior of crank chamber 14, is connected to drive shaft 20 by pin member 21 to be rotatable therewith, and engages with slant plate 50 through hinge mechanism 51. Wobble plate 60 is disposed on a rear side surface of slant plate 50 and bears against slant plate 50 through bearings 52 and 53. An inclined angle of slant plate 50 with respect to the longitudinal axis of drive shaft 20 can be adjusted by hinge mechanism 51.

A plurality of equiangularly spaced cylinders 111b, one of which is shown in Figure 1, are formed in a peripheral portion of cylinder block 111, and piston 70 is reciprocatingly disposed within each of cylinders 111b. Each piston 70 is connected to wobble plate 60 by corresponding connecting rod 71, i.e., one end of each connecting rod 71 is connected to wobble plate 60 with a ball joint mechanism and the other end of each connecting rod 71 is connected to corresponding piston 70 with a similar ball joint mechanism. Sliding rail 80 extends within crank chamber 14, and is held by front end plate portion 120 and cylinder block 111. One peripheral end of wobble plate 60 is connected to slider 81 which is slidably mounted on sliding rail 80. Accordingly, wobble plate 60 only nutates during rotation of drive shaft 20, rotor 40 and slant plate 50 so that pistons 71 are reciprocated within cylinders 70 during rotation of drive shaft 20, cam rotor 40 and slant plate 50. Wobble plate 60 and connecting rods 71 function as a coupling mechanism to convert a rotational motion of drive shaft 20, rotor 40 and slant plate 50 into a reciprocating motion of pistons 71.

Rear end plate portion 130 is provide with peripherally located suction chamber 131 and centrally located discharge chamber 132, which communicate with each of cylinders 70 through corresponding suction port 131a and corresponding discharge port 132a formed through valve plate assembly 15. Rear end plate portion 130 is also provide with inlet port 131b and outlet port 132b which place suction chamber 131 and discharge chamber 132 in fluid communication with an external refrigerant circuit (not shown).

A bypass hole or passageway 150 is formed in cylinder block 111 to communication suction chamber 131 with crank chamber 14 through central bore 111a. A communication between crank chamber 14 and suction chamber 131 is controlled by valve control mechanism 160 disposed within passageway 150.

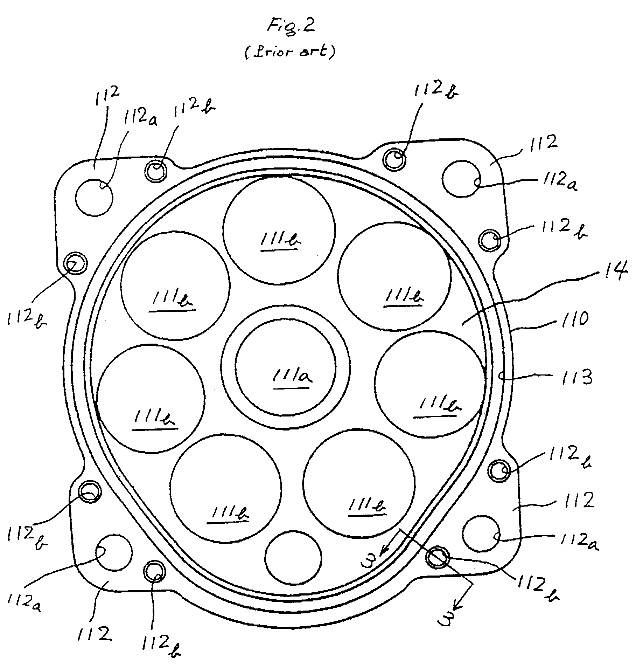

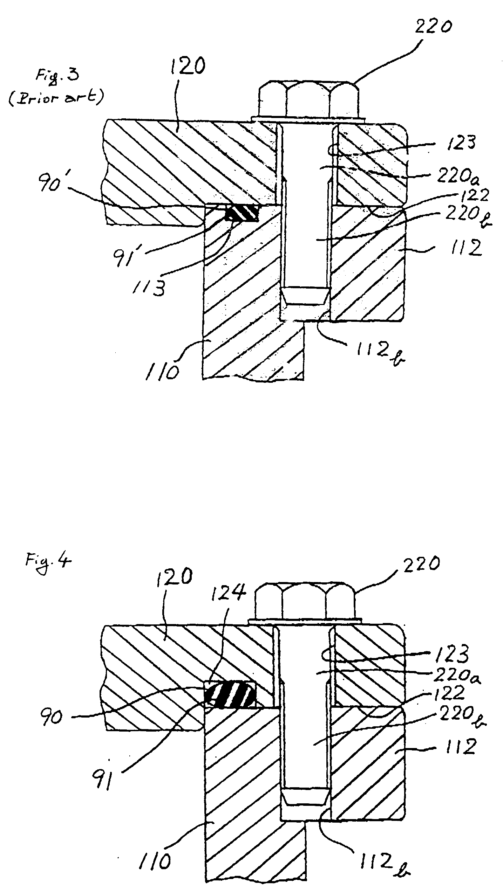

With reference to Figure 2 additionally, cylindrical portion 110 includes a plurality of, for example, four brackets 112 formed at an outer peripheral surface of an opening end region thereof. Four brackets 112 are equiangularly spaced, and each of four brackets 112 radially outwardly extends so as to be generally L-shaped. Each of four brackets 112 includes central hole 112a through which the attaching bolt (not shown) passes and a pair of threaded holes 112b into which threaded portion 220b of shaft 220a of a pair of bolts 220 are screwed respectively as illustrated in Figure 3.

With reference to Figure 3 in addition to Figures 1 and 2, sealing mechanism 90' employed in compressor housing 100 of compressor 10 will be described in detail below.

Sealing mechanism 90' for sealing the mating surfaces of front end plate portion 120 and cylindrical portion 110 includes annular groove 113 formed at the opening end surface of cylindrical portion 110 of compressor housing 100, and O-ring seal element 91' of elastic material disposed within annular groove 113. The depth of annular groove 113 is designed to be about half of the width of annular groove 113. A plurality of depressed portions 122 are formed at a rear end surface of front end plate portion 120 so as to fitly receive brackets 112 therewithin, respectively. A plurality of holes 123, one of which is shown in Figure 3, are formed through an outer peripheral region of front end plate portion 120 so as to correspond with threaded holes 112b of brackets 112, respectively.

In an assembling process of compressor 10, shaft 220a of bolts 220 are inserted into the corresponding holes 123 of front end plate portion 120 respectively after aligning holes 123 with the corresponding threaded holes 112b of brackets 112. After this, threaded portion 220b of shaft 220a of bolts 220 are screwed into the corresponding threaded holes 112b so as to fixedly attach front end plate portion 120 to the opening end of cylindrical portion 110 while O-ring seal element 91' is compressedly disposed within annular groove 113 with elastic deformation thereof so as to seal the mating surfaces of front end plate portion 120 and cylindrical portion 110. A variation of both the width and depth of annular groove 113 resulting from a forming process of annular groove 113 is effectively compensated by the elastic deformation of O-ring seal element 91'.

In recent years, it is required to reduce the weight of the compressor which is used in an automotive air conditioning system. Therefore, thickness of cylindrical portion 110 is required to be decreased as far as the mechanical strength of cylindrical portion 110 can be maintained a certain value which is able to hear a mechanical load on cylindrical portion 110 under a severe operating condition of the compressor. Accordingly, both the width and depth of annular groove 113 are limited to a small value in order to be able to maintain the mechanical strength of the opening end region of cylindrical portion 110 a certain value which can bear a mechanical load on the opening end region of front end plate portion 120 under the severe operating condition of the compressor. Because of the small value of both the width and depth of annular groove 113, annular groove 113 is formed by cutting, such as end milling after a casting process of cylindrical portion 110. This causes an additional complicated forming process of the annular groove of the sealing mechanism employed in the compressor housing.

Accordingly, it is an object of the present invention to provide a sealing mechanism for sealing the mating surfaces of a front end plate and cylindrical portions of a compressor housing with an easy manufacturing process thereof.

This object is achieved by a compressor casing having the features defined in claim 1.

Figure 1 is a longitudinal cross sectional view of a wobble plate type compressor with a variable displacement mechanism in accordance with one prior art embodiment.

Figure 2 is a front elevation of a cylindrical portion of a compressor housing shown in Figure 1.

Figure 3 is an enlarged sectional view taken along the line 3-3 of Figure 2. In the drawing, a sealing mechanism for sealing the mating surfaces of a front end plate and cylindrical portions of the compressor housing in accordance with one prior art embodiment is shown.

Figure 4 is a view similar to Figure 3. In the drawing, a sealing mechanism for sealing the mating surfaces of a front end plate and cylindrical portions of a compressor housing in accordance with one embodiment of the present invention is shown.

Figure 4 illustrates a sealing mechanism 90 employed in a compressor housing of a compressor in accordance with one embodiment of the present invention. In the drawing, the same numerals are used to denote the corresponding elements shown in Figure 3, and an explanation thereof is omitted.

With reference to Figure 4, sealing mechanism 90 for sealing the mating surfaces of front end plate portion 120 and cylindrical portion 110 includes annular groove 124 which is formed at a rear end surface of an outer peripheral region of front end plate portion 120 so as to face the opening end surface of cylindrical portion 110. In the present invention, because of the configuration of front end Plate portion 120, annular groove 124 radially extends from an extension of the inner peripheral surface of cylindrical portion 110 to a position which is spaced from holes 123 but extends over the center of the thickness of cylindrical portion 110 without causing a defective decrease in the mechanical strength of front end plate portion 120. Furthermore, even though the depth of annular groove 124 increases in accordance with an increase in the width of annular groove 124, the increase in the depth of annular groove 124 does not cause the defective decrease in the mechanical strength of front end plate portion 120 because that the depth of annular groove 124 is designed to be about half of the width of annular groove 124. Accordingly, both the width and depth of annular groove 124 are largely increased without causing a defective decrease in the mechanical strength of front end plate portion 120. Because of the large increase in both the width and depth of annular groove 124, annular groove 124 is formed during a casting process of front end plate portion 120. As a result, annular groove 124 can he formed at the rear end surface of front end plate portion 120 without an additional complicated forming process, such as end milling.

Sealing mechanism 90 further includes O-ring seal element 91 of elastic material compressedly disposed within annular groove 124 with elastic deformation thereof so as to seal the mating surfaces of front end plate portion 120 and cylindrical portion 110. A cross-sectional area of O-ring seal element 91 is largely greater than a cross-sectional area of O-ring seal element 91' of the prior art embodiment because that both the width and depth of the annular groove 124 is largely greater than both the width and depth of the annular groove 113 of the prior art embodiment.

Furthermore, since annular groove 124 is formed by casting, such as die-casting, a variation, of both the width and depth of annular groove 124 becomes large in comparison with a variation of both the width and depth of annular groove 113 of the prior art embodiment. However, even though the variation of both the width and depth of annular groove 124 is large, the variation can be effectively compensated by an elastic deformation of O-ring seal element 91 because that capability of compensation for the variation of both the width and depth of the annular groove is directly proportional to a cross-sectional area of the O-ring sealing element.

In the above-mentioned embodiment, the sealing mechanism is applied to a compressor housing which houses a wobble plate type compression mechanism with a variable displacement device. However, according to the present invention, the sealing mechanism is also applicable to a compressor housing which houses any other types of the compression mechanism, such as a fixed capacity wobble plate type compression mechanism or a scroll type compression mechanism.

## Claims

1. A compressor casing including a cylindrical portion (110) having a first end, and an end plate portion (120) fixedly attached to an end surface of said first end of said cylindrical portion (110), said compressor casing housing a compression mechanism therein, said end plate portion (120) rotatably supporting a drive shaft (20) which is operatively connected to said compression mechanism, and sealing means (90) for sealing the mating surfaces of said end plate and said cylindrical portion of said compressor casing, said sealing means (90) including an annular groove (124) formed at one end surface of said end plate portion (120) so as to face said end surface of said first end of said cylindrical portion (110), and an annular seal element (91) compressedly disposed within said annular groove (124),
characterized in that
said annular groove (124) radially extends from an extension of an inner peripheral surface of said cylindrical portion (110) of said compressor casing to a position which extends over the center of the thickness of said cylindrical portion of said compressor casing, and that said annular groove is formed by casting.

2. The compressor casing of claim 1, characterized in that said annular seal element (91) is made of an elastic material.

3. The compressor casing of claim 2, characterized in that said elastic material is rubber.

4. The compressor casing of any of claims 1 to 3, characterized in that the cross section of said annular groove (124) is rectangular and/or the cross section of said annular seal element (91) is circular.

5. The compressor casing of any of claims 1 to 4, characterized in that the depth of said annular groove (124) is half of the width of said annular groove.

6. The compressor casing many of claims 1 to 5, characterized in that said casting is die-casting.

7. The compressor casing of any of claims 1 to 6, said cylindrical portion (110) of said compressor casing including a cylinder block (111), said cylinder block (111) including a plurality of peripherally located cylinders (111b), said compression mechanism including pistons (70) slidably disposed within said respective cylinders (111b), a drive mechanism coupled to said pistons (70) to reciprocate said pistons within said cylinders (111b), said drive mechanism including coupling means (71) for coupling said drive shaft (20) to said pistons (70) such that rotary motion of said drive shaft (20) is converted into reciprocating motion of said pistons (70) in said cylinders (111b), said coupling means including a slant plate (60) disposed on said drive shaft (20) and having a surface disposed at an inclined angle relative to a longitudinal axis of said drive shaft (20).

## Patentansprüche

1. Kompressorgehäuse mit einem zylindrischen Abschnitt mit einem ersten Ende und einem fest an einer Endoberfläche des ersten Endes des zylindrischen Abschnittes (110) angebrachten Endplattenabschnitt (120), wobei das Kompressorgehäuse einen Kompressionsmechanismus darin aufnimmt, der Endplattenabschnitt (120) drehbar eine Antriebswelle (20) lagert, die betriebsmäßig mit dem Kompressionsmechanismus verbunden ist, und einem Abdichtmittel (90) zum Abdichten der zueinander gehörigen Oberflächen der Endplatte und des zylindrischen Abschnittes des Kompressorgehäuses, wobei das Abdichtmittel (90) eine ringförmige Rille (124), die an einer Endoberfläche des Endplattenabschnittes (120) so gebildet ist, daß sie der Endoberfläche des ersten Endes des zylindrischen Abschnittes (110) zugewandt ist, und ein ringförmiges Abdichtelement (91), das zusammengedrückt innerhalb der ringförmigen Rille (124) vorgesehen ist, aufweist,
dadurch gekennzeichnet, daß
sich die ringförmige Rille (124) von einer Verlängerung einer inneren Umfangsoberfläche des zylindrischen Abschnittes (110) des Kompressorgehäuses zu einer Position erstreckt, die sich über die Mitte der Dicke des zylindrischen Abschnittes des Kompressorgehäuses erstreckt, und
daß die ringförmige Rille durch diesen gebildet ist.

2. Kompressorgehäuse nach Anspruch 1, dadurch gekennzeichnet, daß das ringförmige Abdichtelement (91) aus einem elastischen Material gemacht ist.

3. Kompressorgehäuse nach Anspruch 2, dadurch gekennzeichnet, daß das elastische Material Gummi ist.

4. Kompressorgehäuse nach einem der Ansprüche 1 bis 3, dadurch gekennzeichnet, daß der Querschnitt der ringförmigen Rille (124) rechteckig ist und/oder der Querschnitt des ringförmigen Abdichtelementes (91) kreisförmig ist.

5. Kompressorgehäuse nach einem der Ansprüche 1 bis 4, dadurch gekennzeichnet, daß die Tiefe der ringförmigen Rille (124) die Hälfte der Breite der ringförmigen Pille beträgt.

6. Kompressorgehäuse nach einem der Ansprüche 1 bis 5, dadurch gekennzeichnet, daß das Gehäuse durch Druckgießen gemacht ist.

7. Kompressorgehäuse nach einem der Ansprüche 1 bis 6, bei dem der zylindrische Abschnitt (110) des Kompressorgehäuses einen Zylinderblock (111) aufweist, der Zylinderblock (111) eine Mehrzahl von umfangsmäßig angeordneten Zylindern (111b) enthält, der Kompressionsmechanismus Kolben (70) enthält, die gleitend verschiebbar innerhalb der entsprechenden Zylinder (111b) vorgesehen sind, ein Antriebsmechanismus mit den Kolben (70) zum Hin- und Herbewegen der Kolben innerhalb der Zylinder (111b) verbunden ist, der Antriebsmechanismus ein Verbindungsmittel zum Verbinden der Antriebswelle (20) mit den Kolben (70) derart enthält, daß eine Rotationsbewegung der Antriebswelle (20) in eine Hin- und Herbewegung der Kolben (70) in den Zylindern (111b) umgewandelt wird, das Verbindungsmittel eine Schiefscheibe (60) enthält, die auf der Antriebswelle (20) vorgesehen ist und eine Oberfläche aufweist, die in einem Neigungswinkel relativ zu der Längsachse der Antriebswelle (20) vorgesehen ist.

## Revendications

1. Carter de compresseur comportant une partie cylindrique (110) avec une première extrémité, et une plaque d'extrémité (120) montée de façon fixe sur une surface d'extrémité de ladite première extrémité de ladite partie cylindrique (110), ledit carter de compresseur renfermant un mécanisme de compression, ladite plaque d'extrémité (120) supportant de façon pivotante un arbre moteur (20) qui est relié de façon opérationnelle audit mécanisme de compression, et des moyens d'étanchéité (90) pour sceller les surfaces d'ajustement de ladite plaque d'extrémité et de ladite partie cylindrique dudit carter de compresseur, lesdits moyens d'étanchéité (90) comprenant une gorge annulaire (124) formée sur une surface d'extrémité de ladite plaque d'extrémité (120) de façon à faire face à ladite surface d'extrémité de ladite première extrémité de ladite partie cylindrique (110), et un élément d'étanchéité annulaire (91) placé par compression à l'intérieur de ladite gorge annulaire (124), caractérisé en ce que ladite gorge annulaire (124) s'étend radialement à partir d'une extension d'une surface périphérique interne de ladite partie cylindrique (110) dudit carter de compresseur jusqu'à une position qui s'étend au-dessus du centre de l'épaisseur de ladite partie cylindrique dudit carter de compresseur et en ce que ladite gorge annulaire est formée par coulage.

2. Carter de compresseur selon la revendication 1, caractérisé en ce que ledit élément d'étanchéité annulaire (91) est en matière élastique.

3. Carter de compresseur selon la revendication 2, caractérisé en ce que ladite matière élastique est du caoutchouc.

4. Carter de compresseur selon l'une quelconque des revendications 1 à 3, caractérisé en ce que la section transversale de ladite gorge annulaire (124) est rectangulaire et/ou la section transversale dudit élément d'étanchéité annulaire (91) est circulaire.

5. Carter de compresseur selon l'une quelconque des revendications 1 à 4, caractérisé en ce que la profondeur de ladite gorge annulaire (124) est la moitié de la largeur de ladite gorge annulaire.

6. Carter de compresseur selon l'une quelconque des revendications 1 à 5, caractérisé en ce que ledit coulage est un coulage sous pression.

7. Carter de compresseur selon l'une quelconque des revendications 1 à 6, caractérisé en ce que ladite partie cylindrique (110) dudit carter de compresseur comporte un bloc-cylindres (111), ledit bloc-cylindres (111) comportant une pluralité de cylindres situés à la périphérie (111b), ledit mécanisme de compression comportant des pistons (70) disposés de façon à pouvoir glisser à l'intérieur desdits cylindres respectifs (111b), un mécanisme d'entraînement couplé auxdits pistons (70) pour actionner d'un mouvement alternatif lesdits pistons à l'intérieur desdits cylindres (111b), ledit mécanisme d'entraînement comprenant des moyens de couplage (71) pour coupler ledit arbre moteur (20) auxdits pistons (70) de façon que le mouvement de rotation dudit arbre moteur (20) soit converti en un mouvement alternatif desdits pistons (70) dans lesdits cylindres (111b), lesdits moyens de couplage comprenant une plaque inclinée (60) placée sur ledit arbre moteur (20) et ayant une surface placée selon un angle incliné par rapport à un axe longitudinal dudit arbre moteur (20).
